# EUROPEAN PATENT APPLICATION

(11) **EP 3 761 479 A1**
(43) Date of publication of application: **06.01.2021**
(21) Application number: 20182387.9
(22) Date of filing: 25.06.2020
(51) Int. Cl.: H02J 50/00, B62B 3/14

(54) **POWER RECEIVING DEVICE, POWER SUPPLY DEVICE, AND POWER RECEIVING POWER SUPPLY SYSTEM**

(30) Priority: 02.07.2019 JP 2019124054
(71) Applicant: Toshiba TEC Kabushiki Kaisha, Tokyo 141-8562 (JP)
(72) Inventor: KOGOSHI, Takahiro, Tokyo 141-8562 (JP); MATSUMURA, Kazuyuki, Tokyo 141-8562 (JP)
(74) Representative: Bandpay & Greuter

(57) **Abstract**

According to one embodiment, the power receiving device includes a power receiving unit and a cleaning member. The power receiving device receives from a power supply device in a non-contact manner. The power receiving unit is provided on a movable body which can move in a horizontal direction and has a power receiving surface which is formed downward and which can face a power supply surface of the power supply device by the movement of the movable body in the horizontal direction. The cleaning member is provided to project downward from the receiving surface.

## Description

### FIELD

Embodiments of the present invention relate to a power receiving device, a power supply device, and a power receiving / power supply system.

### BACKGROUND

Conventionally, there has been known a moving work robot which can be charged in a non-contact manner to a rechargeable battery provided in a moving work robot.

When the moving work robot is placed and set on the charging unit, the electrode surface formed upward in the charging unit and the electrode surface formed downward in the moving work robot can be charged in a non-contact manner via a gap between each the electrode surface.

In the charging state, the gap is shut off from the outside.

Therefore, the magnetic interference during charging and the inclusion of foreign matters into the gap are prevented.

As a result, a reduction of charging efficiency is prevented.

In Patent Document 1, when a foreign matter is placed on the electrode of the charging unit before the moving work robot is set in the charging unit, there is a possibility that the charging efficiency is reduced by being charged as it is.

### BRIEF DESCRIPTION OF THE DRAWINGS

FIG. 1 is a perspective view of a power receiving device according to a first embodiment.
FIG. 2 is a bottom view of the power receiving device according to the first embodiment when viewed from below.
FIG. 3 is a perspective view showing a power receiving unit according to a first embodiment.
FIG. 4 is a perspective view showing a part of the cleaning member according to the first embodiment.
FIG. 5 is a perspective view of a power supply device according to a first embodiment.
FIG. 6 is a perspective view of the power receiving / power supply system according to the first embodiment.
FIG. 7 is a diagram for explaining the operation of the cleaning member according to the first embodiment.
FIG. 8 is a diagram for explaining the operation of the cleaning member according to the first embodiment.
FIG. 9 is a diagram for explaining the operation of the cleaning member according to the second embodiment.
FIG. 10 is a diagram for explaining the operation of the cleaning member according to the second embodiment.
FIG. 11 is a diagram showing a modified example of the cleaning member.

### DETAILED DESCRIPTION

To this end, there is provided a receiving / discharging system which includes : a power receiving device, having a power receiving surface and capable of moving in a horizontal direction, and a power supply device having a power supply surface capable of facing the power receiving surface by the horizontal movement of the power receiving device, and supplying power to the power receiving device in a non-contact manner, the power receiving surface and the power supply surface being opposed to each other in the vertical direction. According to the present invention, the receiving / discharging system further comprises a cleaning member provided so as to protrude from an upper surface side between the power receiving surface and the power supply surface to a lower surface side between the power receiving surface and the power supply surface.

Preferably, a foreign matter housing groove on the power supply device.

The present invention also relates to a power receiving device according to claim 1 for receiving power from a power supply device in a non-contact manner wherein the power supply device has a power supply surface facing upward, the power receiving device comprising: a movable body movable in a horizontal direction; a power receiving unit provided on the movable body, having a power receiving surface which is formed to face downward and to face the power supply surface of the power supply device by the movement of the movable body in the horizontal direction; and a cleaning member provided to project downward with respect to the receiving surface.

Preferably, the power receiving unit having a front side and a rear side in a forward-moving direction in which movable body moves to have a power supplying position at which power is supplied in a non-contact manner from the power supply unit via the power supply surface to the power receiving unit and wherein the cleaning member is disposed on the front side of the power receiving unit.

Preferably, the cleaning member is disposed on each of the front side and the rear side between which the power receiving surface is disposed.

Preferably, the power receiving device is a shopping cart.

Preferably, the cleaning member has a width wider than the width of the power receiving surface in a direction perpendicular to the moving-forward direction.

Preferably, the cleaning member includes a mounting part which is detachably attached to the power receiving unit and a brush (11B) which is provided on the mounting part, the brush having a lower end extending downward from the power receiving surface.

In this case, the lower end of the clean member is located lower than the power receiving surface in a vertical direction.

The present invention also relates to a power supply device for supplying power to a power receiving device. The power supply device may comprise a power supply unit having a power supply surface which is formed to face downward and to oppose to a power receiving surface of the power receiving device. The power supply device may further comprise a cleaning member provided so as to protrude downward from the power supply unit.

Preferably, a groove for accommodating the foreign matter removed by the cleaning member is provided adjacent to the lower surface.

Hereinafter, as of the first embodiment, a power receiving device, a power supply device, and a power receiving / power supply system including both of the power receiving device and the power supply device will be described with reference to the drawings. In the embodiment, a cart having a scanner is applied as an example of a power receiving device that receives electric power from a power supply device in a non-contact manner. A placement unit of a cart is used as an example of the power supply device. However, the configuration of the power receiving device and the power supply device are arbitrary, and the present invention is not limited thereto.

### (first embodiment)

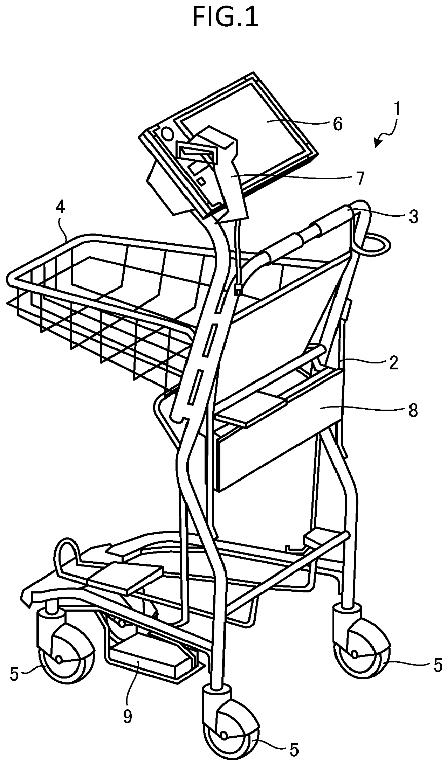

First, a cart 1 which is an example of a power receiving device will be described. The cart 1 is a handcart used in a store such as a supermarket, and is capable of carrying and transporting goods purchased by a customer. As shown in FIG. 1, the cart 1 includes a main body 2 composed of a plurality of frames, a handle portion 3, a housing part 4 on which a shopping basket or the like is placed, a caster 5, a tablet terminal 6, a scanner 7, a battery holder 8, and a power receiving unit 9. The main body 2 constitutes a movable body and is supported by a caster 5 so as to be movable in the horizontal direction. The caster 5 functions as a supporter for supporting the main body 2 so as to be movable in the horizontal direction.

The handle portion 3 is formed of a portion of the frame of the main body 2 and is provided for the customer to move the cart 1. The housing part 4 is formed adjacent to the handle portion 3, and a basket for storing commodities purchased by the customer is placed thereon. The casters 5 are rotatably attached to the four legs of the cart 1. The distance between the pair of casters 5 and 5 close to the handle portion 3 is wider than the one between the other pair of casters 5 and 5. In the embodiment, the side on which a pair of casters 5 5 having a narrow distance are provided is defined as a front side, and the side on which the pair of casters 5 5 having a wide distance are provided is defined as a rear side.

The tablet terminal 6 is detachably provided on the main body 2. The scanner 7 is detachably provided to the main body 2 via a power cord. The scanner 7 is used by the customer to read information of a bar code attached to a commodity to be purchased by a customer. The tablet terminal 6 registers commodity information of the commodity to which the barcode is attached, based on the information of the barcode read by the scanner 7. Then, an accounting machine (not shown) performs accounting processing based on the commodity information transmitted from the tablet terminal 6. The accounting processing is defined as a processing for displaying a total amount of money or a tax amount based on the merchandise information, a processing for calculating and displaying a change based on the deposit deposited from the customer, and a process for issuing a receipt on which the commodity information, the settlement information (total amount, deposit amount, change amount, etc.) is printed. The battery holder 8 holds a battery for supplying power to the scanner 7.

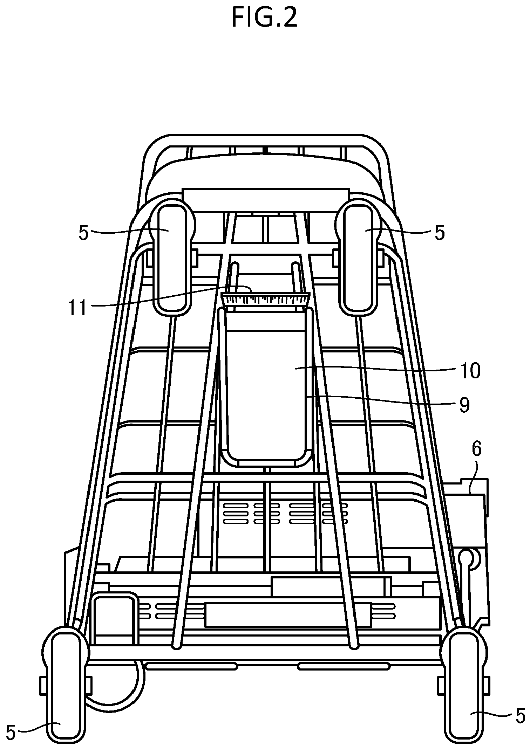

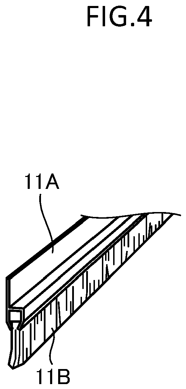

Next, the power receiving unit 9 will be described with reference to FIG. 2 - FIG. 4. The power receiving unit 9 is provided on a main body 2 which can be moved in the horizontal direction by a caster 5, and is supplied with electric power from a power supply unit which will be described later. The power receiving unit 9 includes a planar power receiving surface 10 facing downward, a cleaning member 11, a power receiving circuit including a power receiving coil (not shown), and a charging circuit. The power receiving surface 10 is an electrode surface and is disposed between the caster 5 on the front side and the caster 5 on the rear side. The power receiving coil is disposed along the power receiving surface 10. The power receiving circuit receives electric power from the power supply unit. The charging circuit converts the received power into a DC voltage to charge the battery.

The cleaning member 11 is provided so as to protrude downward from the power receiving surface 10.

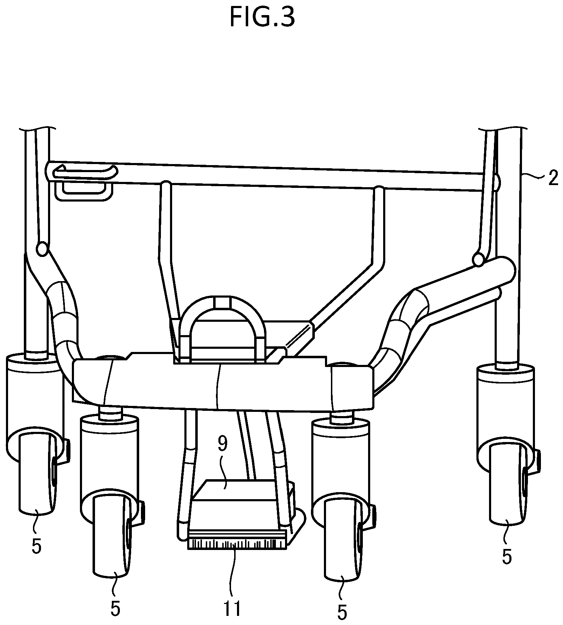

As shown in FIGS. 2 and 3, the cleaning member 11 is disposed on the front side of the power receiving surface 10, and is provided along the front edge of the power receiving surface 10.

That is, the cleaning member 11 is disposed on the front side of the power receiving surface 10 in a direction (hereinafter referred to as a moving-forward direction) in which the cart 1 is moved when it is accommodated in a placement unit which will be described later.

It is preferable that the width of the cleaning member 11 in the left-right direction (the direction perpendicular to the moving-forward direction) is wider than the width in the left-right direction of the power receiving surface 10.

The cleaning member 11 includes a mounting part 11A which is detachably attached to a holding portion (not shown) of the power receiving unit 9, and a brush 11B which is provided on the mounting part 11A.

The brush 11B is made of, for example, elastic fibrous bristles, and its lower end projects downward from the power receiving surface 10.

The cleaning member 11 may be a thin plate-like rubber blade or the like instead of a bristle shape, and may be bent in the front-rear direction.

The cleaning member 11 is attachable and detachable to and from the power receiving unit 9 so as to be replaceable when the function of the brush 11B is reduced due to deformation of the brush 11B.

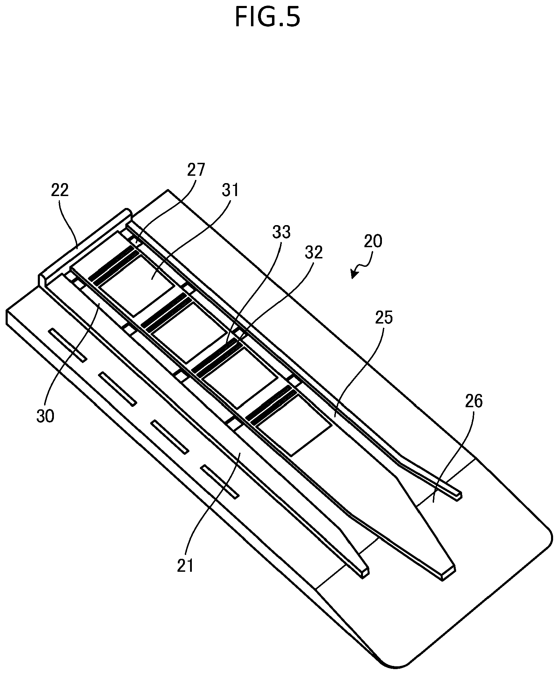

Next, a placement unit 20 which is a power supply device will be described with reference to FIG. 5. The placement unit 20 is arranged in a cart place in a store of a supermarket and accommodates a plurality of carts which are not used. The placement unit 20 includes a guide 21, a stopper 22, and a plurality of (four in the embodiment) power supply unit 30.

The guide 21 guides a pair of front casters 5 of the cart 1, and is provided with guide grooves 25 integrally formed along a longitudinal direction (hereinafter referred to as "front-rear direction") of the placement unit 20. The guide groove 25 has a wide guide portion 26 in the rear side in the front-rear direction. The guide groove 25 is provided with a positioning portion 27. The positioning part 27 is constituted by a recessed part formed on the bottom surface of the guide groove 25, and when the front caster 5 of the cart 1 is inserted, the cart 1 is positioned at a position corresponding to the power supply unit. The positioning portion 27 is provided in the same number as the power supply unit 30 at a predetermined interval in the front-rear direction of the guide groove 25.

The stopper 22 is positioned at the front end in the front-rear direction of the placement unit 20 so as to project upward. The width in the left-right direction of the stopper 22 is wider than the width of the guide 21. The stopper 22 has a function of preventing the cart 1 guided by the guide 21 from jumping forward from the placement unit 20.

The power supply unit 30 is positioned between a pair of guide grooves 25 and 25, and is provided in a plurality of positions along the front-rear direction of the placement unit 20. The power supply unit 30 includes a power supply surface 31 composed of an electrode surface on a plane facing upward, and a power supply circuit provided with a power supply coil (not shown). The power supply unit 30 is provided corresponding to the positioning portion 27. When the cart 1 is positioned at a predetermined position by the positioning portion 27, the power supply surface 31 is opposed to the power receiving surface 10 of the cart 1 through a distance of about one centimeter. In this state, electricity is supplied to the power supply coil to generate electromagnetic induction, so that the power supply unit 30 supplies power to the power receiving unit 9 in a non-contact manner. As a method of non-contact power supply, various methods such as electromagnetic induction type and magnetic field resonance type are known, but various types of methods can be used. In the present embodiment, the term "non-contact" is used in a state where the power transmission is carried out by wireless. Therefore, even if the power supply surface 31 and the power receiving surface 10 are in contact with each other at the time of power supply by some factor, regardless of whether they are intended or not, it is assumed that power is supplied in a non-contact manner if the power transmission is performed by wireless.

The power supply unit 30 is provided with a foreign matter housing groove 32 located on the front side of the power supply surface 31 and a brush housing groove 33 positioned on the front side of the foreign matter housing groove 32. Each of the foreign matter housing grooves 32 and the brush housing grooves 33 has a width in the left-right direction equal to or slightly larger than the width in the left-right direction of the power supply surface 31. The depth of the brush housing groove 33 is shallower than the depth of the foreign matter housing groove 32.

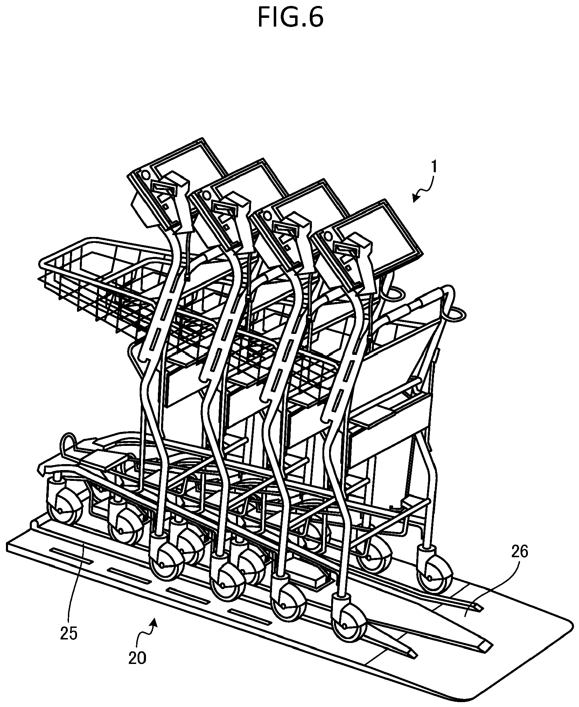

FIG. 6 shows a state in which four carts 1 are placed on a placement unit 20. As is well known, each cart 1 which is not used for the customer is arranged such that a portion thereof is overlapped in the front-rear direction. In this state, the power receiving surfaces 10 of the carts 1 are opposed to each other in the vertical direction on the respective power supply surfaces 31 of the placement unit 20. In this example, the power receiving surface 10 is an upper surface, and the power supply surface 31 is a lower surface. When the cart 1 is not used and is placed on the placement unit 20, the power receiving unit 9 charges the battery of the cart 1 with electric power received from the power supply unit 30. The power receiving / power supply system is constituted by a cart 1 as a power receiving device and a placement unit 20 as a power supply device.

Next, a point in which the cart 1 is placed on the placement unit 20 and the power receiving unit 9 is received from the power supply unit 30 will be described. When the customer finishes shopping, a customer or a supermarket employee (hereinafter referred to as a customer, etc.) moves the front caster 5 of the cart 1 into the guide groove 25 through the guide portion 26 of the placement unit 20. When there are no carts 1 on the placement unit 20, the cart 1 is positioned at a position corresponding to the foremost power supply surfaces 31 located on the placement unit 20.

The customer, etc. pushes the handle portion 3 of the cart 1 to move the front caster 5 forward in the guide groove 25. At this time, although the front caster 5 enters the positioning portion 27 on the guide portion 26 side once, the customer, etc. can further push the cart 1 forward so as to exceed the positioning portion 27. Then, after passing through the three positioning portions 27, the front caster 5 enters the positioning portion 27 positioned at the foremost side. Even if the customer, etc. is erroneously pushed forward, the cart 1 is prevented from being moved forward in contact with the stopper 22. As described above, when the cart 1 is positioned at a predetermined position, the power receiving surface 10 of the power receiving unit 9 and the power supply surface 31 of the power supply unit 30 are opposed to each other in the vertical direction, so that power is supplied to the power supply unit 27.

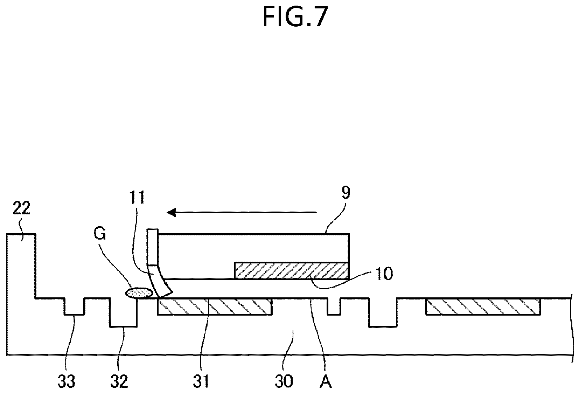

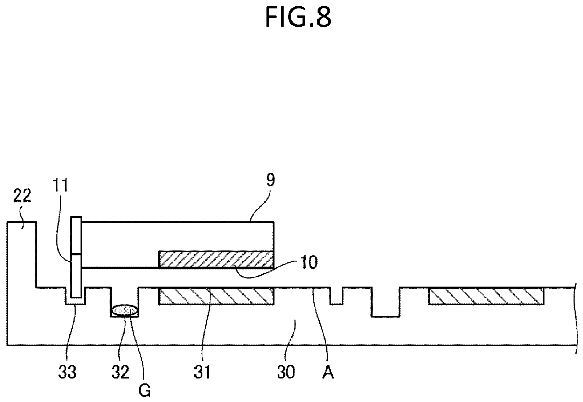

The function of the cleaning member 11 in the process of placing the cart 1 at a predetermined position on the placement unit 20 will now be described with reference to FIGS. 7 and 8. When a customer, etc. takes the cart 1 into and out of the placement unit 20, foreign matters such as dust may fall on the supply surface of the placement unit 20. In FIG. 7, a foreign matter such as dust is represented by G.

When the cart 1 is moved along the guide 21 after the front casters 5 of the cart 1 is positioned in the guide portion 26, the lower end of a cleaning member 11 provided on the front side of the power receiving surface 10 in the moving direction is brought into contact with the upper surface A of the power supply unit 30 and is slightly bent. When a customer, etc. presses the cart 1 from this state, as shown in FIG. 7, the cart 1 moves, and the cleaning member 11 moves while abutting against the upper surface A of the power supply unit 30 and the power supply surface 31 forming the same surface as the upper surface A. At this time, the cleaning member 11 cleans the upper surface A and the power supply surface 31 of the power supply unit 30 to remove the foreign matters placed thereon.

The cleaning member 11 sweeps the foreign matter G placed on the power supply surface 31 located on the foremost side to drop the foreign matter G into the foreign matter housing groove 32. The cart 1 is then further moved and positioned in a predetermined place (FIG. 8). In this position, the power receiving surface 10 and the power supply surface 31 are opposed to each other in the vertical direction. The distal end of the cleaning member 11 is positioned within the brush housing groove 33, and the cleaning member 11 returns from the flexed state to the natural state.

In the embodiment, the power receiving surface 10 and the power supply surface 31 are opposed to each other in the vertical direction in a configuration in which the power receiving device is moved in the horizontal direction and the power receiving surface and the power supply surface face are opposed to each other, so that the following advantages are obtained as compared with the case where they are opposed to each other in a horizontal direction. In order to supply power to the power receiving unit 9 from the power supply unit 30, it is necessary for the power receiving surface 10 and the power supply surface 31 to face each other in an appropriate state. A suitable condition is a predetermined relationship in which both the distance between the power receiving surface 10 and the power supply surface 31 in the direction opposite to each other and the position of the power receiving surface 10 and the power supply surface 31 in the direction along the surface are made to be able to be supplied with electric power.

In the case where the caster 5 of the cart 1 is grounded and the cart 1 moves in a state where the distance to the floor surface is constant, the distance between the power receiving surface 10 and the power supply surface 31 is kept constant by having the both oppose each other in the vertical direction, in other words, by forming the both along the moving direction. Therefore, there is an advantage that the configuration required when the power receiving surface 10 and the power supply surface 31 are opposed to each other in the horizontal direction, that is, the configuration for positioning such that the distance in the direction opposite to each other is constant, becomes unnecessary. In the embodiment, the following effects can be obtained on the assumption that this configuration is provided.

According to the embodiment, as described above, when the cart 1 is moved so that the power receiving surface 10 and the power supply surface 31 are opposed to each other, the cleaning member 11 provided on the front side (front side in the moving direction of the cart 1) of the power receiving surface 10 and projecting downward sweeps the upper surface of the power supply surface 31 while abutting on the power supply surface 31.

Thus, the foreign matter placed on the upper surface of the power supply surface 31 can be removed, so that a decrease in power supply efficiency from the power supply unit 30 to the power receiving unit 9 can be reduced.

More specifically, in the case where the power supply is performed in a state where foreign matter such as metal is placed on the power supply surface 31 and is positioned between the power receiving surface 10 and the power supply surface 31, the metal is subjected to the magnetic flux energy from the power supply unit 30 to generate heat, which causes loss, but in accordance with the embodiment, the decrease of power supply efficiency can be reduced.

Moreover, since the foreign matters on the power supply surface 31 are removed accompanying the operation of housing the cart 1 at a predetermined position, it is not necessary to perform any special operation for removing the foreign matter, so that it is possible to easily suppress the deterioration of the power supply efficiency.

Further, according to the embodiment, since the foreign matter housing groove 32 for housing the foreign matter removed accompanying the operation of housing the cart 1 at a predetermined position is provided, the removed foreign matter is not scattered. Therefore, it is only necessary to clean the foreign matter housing groove 32, and it is not necessary to carry out troublesome cleaning. Further, when a cartridge attachable to and detachable from the foreign matter housing groove 32 is provided, disposal of foreign matters can be made easier.

In addition, according to the embodiment, since the brush housing groove 33 for receiving the tip of the brush 11B is provided in a state where the cart 1 is positioned at a predetermined position where the power receiving surface 10 and the power supply surface 31 are opposed to each other, it is possible to suppress deterioration in durability of the cleaning member 11. That is, since the brush 11B has a function of removing foreign matters by sweeping on the power supply surface 31, when it is on the power supply unit 30, it is in a bent state, but when the cart 1 is housed in a predetermined position for a long time, it becomes natural. Accordingly, deformation of the brush 11B can be suppressed, and as a result, deterioration in durability of the cleaning member 11 can be suppressed.

### (second embodiment)

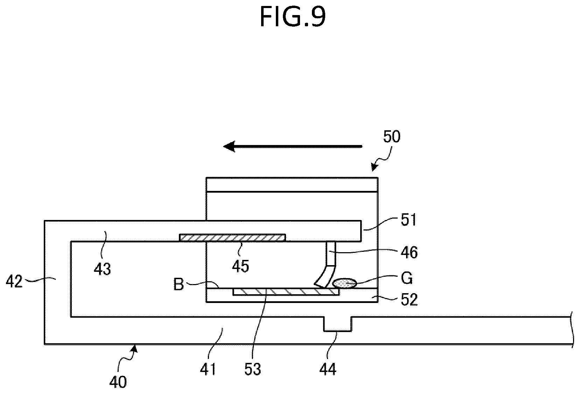

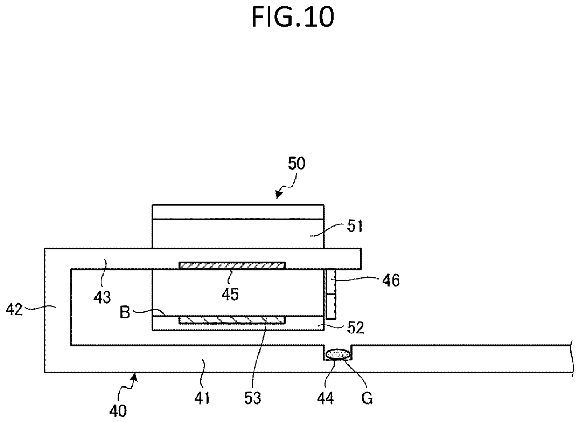

Next, a second embodiment will be described with reference to FIG. 9 and FIG. 10. FIGS. 9 and 10 show a cart 1 and a part of a placement unit 20. This embodiment differs from the above-described embodiment in the four followings. The number of power supply device unit provided on the placement unit is one. The power supply surface constitutes an upper surface and is formed downward. The power receiving surface constitutes a lower surface and is formed upward. The cleaning member is provided on the placement unit side to sweep the power receiving surface.

The placement unit 40 constitutes a power supply device for supplying power to a power receiving device which can move in the horizontal direction in a non-contact manner, and includes a bottom surface part 41, a support arm part 42 and a power supply unit 43. The bottom surface part 41 is provided with a foreign matter housing groove 44. The support arm part 42 is formed to extend upward from the bottom surface part 41 and supports the power supply unit 43 in a state spaced upward from the bottom surface part 41. The power supply unit 43 includes a power supply surface 45 to be formed downward, and a cleaning member 46 disposed behind the power supply surface 45. Here, the side receiving the cart 50 (the right side in FIG. 9) is defined to as the rear side.

On the other hand, the cart 50 has a support part 51 at a front end portion thereof.

The support part 51 is provided with a power receiving unit 52 which is parallel to the power supply unit 43.

The power receiving surface 53 formed in the power receiving unit 52 is formed upward so as to be able to face the power supply surface 45 in the vertical direction.

With reference to FIGS. 9 and 10, the function of cleaning member 46 in the course of the cart 50 being placed in a predetermined position in placement unit 40 will now be described. When there are many customers, a foreign matter G such as dust may be placed on a power receiving surface 53 provided on the cart 1 during shopping. The cleaning member 46 removes the foreign matter G on the power receiving surface 53 in conjunction with the operation of housing the cart 50 in the placement unit 40.

As in the description of FIGS. 7 and 8, when the cart 50 is moved in the direction of the arrow, the lower end of a cleaning member 46 provided in the power supply unit 43 in the is brought into contact with the upper surface B of the power receiving unit 52 and is slightly bent. When the cart 50 further moves from this state, the cleaning member 46 comes into contact with the upper surface B of the power receiving unit 52 and the receiving surface 53 which forms the same surface as the power receiving unit 52. At this time, the cleaning member 46 cleans the upper surface B and the power receiving surface 53 of the power receiving unit 52 to remove foreign matters placed thereon.

Thereafter, the cart 50 is further moved, and when the power receiving surface 53 and the power supply surface 45 are in a predetermined position opposed to each other in the vertical direction, the cart 50 is positioned on the placement unit 40. In this state, as shown in FIG. 10, the cleaning member 46 is separated from the upper surface B of the power receiving unit 52 and returns to its natural state. At this time, the foreign matter G removed by the cleaning member 46 is housed in the foreign matter housing groove 44.

According to the second embodiment, as described above, the cart 50 moves and the cleaning member 46 sweeps the power receiving surface 53 to remove the foreign matter placed thereon. Therefore, the foreign matters on the power receiving surface 53 formed upward can be removed before the power supply from the power supply unit 43 to the power receiving unit 52. Therefore, as in the embodiment described above, it is possible to prevent the power supply from being performed in a state where the foreign matter is positioned between the power receiving surface 53 and the power supply surface 45, so that it is possible to suppress the reduction in the power supply efficiency.

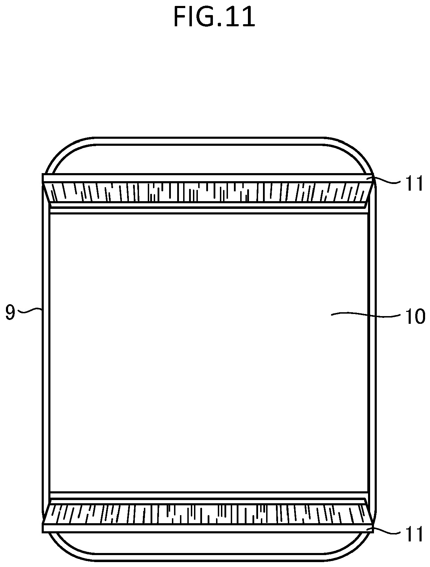

Next, a modified example relating to the cleaning member 11 will be described with reference to FIG. 11. FIG. 11 shows a modified example of the power receiving unit 9 according to the first embodiment or the power supply unit 43 according to the second embodiment. Here, the power receiving unit 9 according to the first embodiment will be described. In addition, the power supply unit 43 will be described with reference to the corresponding configuration numbers.

The difference from the first embodiment is that the cleaning member 11 is disposed on the front side and the rear side in the
moving direction of the cart 1 with a power receiving surfaces 10 interposed therebetween. The movement direction of the cart 1 is the direction in which the cart 1 moves along the guide 21.

According to the above structure, when the cart 1 is moved to a predetermined position where the power receiving surface 10 and the power supply surface 31 face each other, even if the cart 1 is erroneously moved to a position beyond a predetermined position, and it is left in this state for a fixed time, the foreign matter on the power supply surface 31 can be removed before supplied with electric power. This is because when the cart 1 is returned from a position beyond a predetermined position to a predetermined position, the cleaning member 11 disposed on the rear side of the power receiving surface 10 can sweep the power supply surface 31. When the cleaning member 46 in the second embodiment is disposed on the front side and the rear side in the moving direction of the cart 1 with the power supply surface 45 interposed therebetween, the same effect can be obtained that foreign matters on the power receiving surface 53 can be removed before supplied with electric power.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

For example, in the embodiment, the power receiving device is applied to a cart of a POS system using a cart, but may be applied to a self-propelled robot equipped with a battery, for example. In addition, in the embodiment, the power supply device is applied to a placement unit including a plurality of power supply units, but it may also be applied to a case where only one power supply units are provided.

In the embodiment, the caster is used as the structure for movably supporting the power receiving device on the surface to be mounted such as a floor, but the caster is not limited to the caster as long as it is supported so as to be movable in the horizontal direction.

In addition, although a brush having a length which is in contact with the power receiving surface and the power receiving surface opposite to each other is adopted as a cleaning member, it does not necessarily have to come into contact with the power supply surface or the power receiving surface, but is not required to be contactable and flexible, as long as it can remove foreign matters on the surface.

## Claims

1. A receiving / discharging system including : a power receiving device (1), having a power receiving surface (10) and capable of moving in a horizontal direction, and a power supply device (20) having a power supply surface (31) capable of facing the power receiving surface by the horizontal movement of the power receiving device, and supplying power to the power receiving device in a non-contact manner, the power receiving surface and the power supply surface being opposed to each other in the vertical direction;
**characterized in that** the receiving / discharging system further comprises a cleaning member provided so as to protrude from an upper surface side between the power receiving surface and the power supply surface to a lower surface side between the power receiving surface and the power supply surface.

2. The receiving / discharging system according to claim 1, wherein a groove for accommodating the foreign matter removed by the cleaning member is provided on to the lower surface.

3. A power receiving device (1) according to claim 1 or 2 for receiving power from a power supply device in a non-contact manner wherein the power supply device (20) has a power supply surface (31) facing upward, the power receiving device (1) comprising:
- a movable body (2) movable in a horizontal direction;
- a power receiving unit (9) provided on the movable body (2), having a power receiving surface (10) which is formed to face downward and to face the power supply surface (31) of the power supply device (30) by the movement of the movable body in the horizontal direction; and
- a cleaning member (11) provided to project downward with respect to the receiving surface (10).

4. The power receiving device according to claim 3, wherein the power receiving unit (9) having a front side and a rear side in a forward-moving direction in which movable body (2) moves to have a power supplying position at which power is supplied in a non-contact manner from the power supply unit via the power supply surface (31) to the power receiving unit (9) and wherein the cleaning member (11) is disposed on the front side of the power receiving unit (9).

5. The power receiving device according to claim 4, wherein the cleaning member (11) is disposed on each of the front side and the rear side between which the power receiving surface (10) is disposed.

6. The power receiving device according to any one of claims 1 to 5, wherein the power receiving device is a cart (1).

7. The power receiving device according to any one of claims 1 to 6, wherein the cleaning member (11) has a width wider than the width of the power receiving surface (10) in a direction perpendicular to the moving-forward direction.

8. The power receiving device according to any one of claims 1 to 7, wherein the cleaning member (11) includes a mounting part (11A) which is detachably attached to the power receiving unit (9) and a brush (11B) which is provided on the mounting part (11A), the brush (11B) having a lower end extending downward from the power receiving surface (10).

9. A power supply device (40) for supplying power to a power receiving device (1) according to claim 1 comprising a power supply unit (43) having a power supply surface (45) which is formed to face downward and to oppose to a power receiving surface (53) of the power receiving device (50), **characterized by** further comprising a cleaning member provided so as to protrude downward from the power supply unit (43) .

10. The power supply device (40) according to claim 9, comprising a bottom surface part (41) formed to oppose the power supply unit (43) and a support arm part (42) connecting the bottom surface part (41) and the power supply unit (43).

11. The power supply device (40) according to claim 10, wherein a groove (44) for accommodating the foreign matter removed by the cleaning member is provided on the bottom surface part (41).
